# EUROPÄISCHE PATENTANMELDUNG

(11) **EP 2 092 831 A1**
(43) Veröffentlichungstag der Anmeldung: **26.08.2009**
(21) Anmeldenummer: 08001404.6
(22) Anmeldetag: 25.01.2008
(51) Int. Cl.: A23B 7/148, A23L 3/3418

(54) **System zur Überwachung und Steuerung der Atmosphärenzusammensetzung in einem Container zum Transport von Lebensmitteln oder anderen empfindlichen Produkten**

(71) Anmelder: Cargofresh AG, 22926 Ahrensburg (DE)
(72) Erfinder: Schallnus, Harald, Dr.-Ing., 22359 Hamburg (DE); Renner, Thomas, 22926 Ahrensburg (DE)
(74) Vertreter: Meyer, Ludgerus

(57) **Zusammenfassung**

Die Erfindung betrifft ein System zur Überwachung und Steuerung der Atmosphärenzusammensetzung in einem Container zum Transport von Lebensmitteln oder anderen empfindlichen Produkten, bei dem wenigstens der O₂-Gehalt und der CO₂-Gehalt der Containeratmosphäre mittels Sensoren erfasst wird und die von den Sensoren erfassten O₂- und CO₂-Ist-Werte an ein dem Container zugeordnetes Steuergerät übermittelt und mit gespeicherten Soll-Werten verglichen werden, wobei bei Abweichung der Ist-Werte von den Soll-Werten das Steuergerät Steuersignale an Betätigungsmittel zur Erhöhung oder Erniedrigung des O₂- und/oder des CO₂-Werts in der Containeratmosphäre abgibt, um die O₂- und/oder CO₂-Werte in Richtung auf eine Annäherung an die Soll-Werte zu ändern. Erfindungsgemäß ist der Container an eine vom Container räumlich getrennte Stickstoffversorgungseinrichtung anschließbar, welche in der Lage ist, mehrere gleichartige Container mit einem Stickstoffstrom zu versorgen und bei angeschlossener Stickstoffversorgungseinrichtung mittels eines Steuergeräts in Abhängigkeit des O₂-Gehalts im Container Betätigungsmittel zur Steuerung des dem Container zugeführten Stickstoffstroms einstellbar sind.

## Beschreibung

Die Erfindung betrifft ein System zur Überwachung und Steuerung der Atmosphärenzusammensetzung in einem Container zum Transport von Lebensmitteln oder anderen empfindlichen Produkten nach dem Oberbegriff des Anspruchs 1.

Seit mehr als 20 Jahren ist es bekannt, die Lager- oder Transportfähigkeit von empfindlichen Gütern, wie Lebensmitteln oder anderen verderblichen Produkten, dadurch erhöhen zu können, dass sie unter einer veränderten Atmosphärenzusammensetzung gelagert oder transportiert werden. Besonders bedeutsam ist dabei die Veränderung der Gaszusammensetzung bezüglich einer Verringerung des O₂-Gehalts und auch der Anpassung des CO₂-Gehalts der Lager- oder Transportatmosphäre an das zu lagernde oder transportierende Gut.

Bei einem System mit modifizierter Atmosphäre (MA-System) erfolgt eine im Wesentliche selbsttätige Einstellung der Atmosphäre dadurch, dass der Sauerstoffgehalt der Atmosphäre durch die eigene Respiration des Lebensmittels, insbesondere von Früchten, reduziert wird. Von der Ware wird Sauerstoff aufgenommen und in erster Linie zu Kohlendioxid (CO₂) und weiteren Reifegasen umgewandelt. Um eine Anpassung an veränderte Lager- oder Transportbedingungen zu ermöglichen, kann eine Frischluftzufuhr zum Lager- oder Transportbehälter geschaffen werden. Damit lässt sich bei ungewünschten Abweichungen von einer optimierten Atmosphärenzusammensetzung in einem bestimmten Umfang eine Anpassung vornehmen.

Die Atmungsaktivität von Lebensmitteln ist je nach Ware sehr unterschiedlich. Insbesondere Spargel und Avocados sind stark atmende Produkte, die die Atmosphärenzusammensetzung durch ihre Atmungsaktivität selbständig verändern. Daher muss die Atmosphäre vor der Anreicherung schädlicher Gase geschützt werden. Dies kann durch die automatisierte Belüftung erfolgen. Bei anderen Produkten, wie z. B. Beerenfrüchten, die eine geringere Atmungsaktivität entwickeln, reicht es häufig aus, eine Anfangseinstellung einer modifizierten Atmosphäre vorzunehmen und dann den entsprechenden Transportbehälter lediglich zu verschließen.

Häufig werden Container nach dem Beladen zunächst mit einer modifizierten Atmosphäre gespült, um einerseits einen definierten Ausgangszustand der Atmosphärenzusammensetzung zu erreichen und andererseits um z. B. eine anfänglich sehr kleine Sauerstoffkonzentration verwenden zu können. Wenn der Lager- oder Transportbehälter im Wesentlichen verschlossen bleibt, kann die Atmosphärenzusammensetzung für eine lange Zeit im gewünschten Rahmen bleiben.

Neben der Einstellung einer bestimmten Atmosphärenzusammensetzung ist es zur Erhaltung der Qualität der Ware auch wichtig, eine Temperatursteuerung sowie in vielen Fällen eine Feuchtesteuerung vorzunehmen. Daher werden temperaturempfindliche Lebensmittel heute überwiegend in sogenannten Reefer-Containern transportiert, die eine eigene Kühlanlage besitzen. Mit geeigneten Sensoren und Steuereinrichtungen lässt sich die Temperatur im Inneren des Lager- oder Transportbehälters auf den gewünschten Wert einstellen.

Um auch über längere Zeiträume eine den zu transportierenden oder zu lagernden Produkten, wie Lebensmitteln, angepasste Atmosphäre bereit zu stellen, die nicht nur zwischen der durch die Produkte selbst geschaffenen Atmosphäre und der Außenatmosphäre variierbar ist, sind ferner sogenannte CA-Systeme (Controlled Atmosphere) bekannt geworden, bei denen bestimmte Gase, wie Stickstoff oder Argon, durch geeignete Erzeugungseinrichtungen produziert und in den Lager- oder Transportbehälter eingeleitet werden. Durch eine geeignete Sensorik lässt sich die im Behälter resultierende Atmosphärenzusammensetzung erfassen und nach Bedarf einstellen.

Zu diesem Zweck verwendbare Einrichtungen zur Erzeugung der künstlichen Atmosphäre, insbesondere in Containern, sind jedoch kostenaufwendig und empfindlich. In der Praxis werden sie zumeist in abgetrennte Abteilen des Containers eingebaut, in denen bereits die Kühlanlage aufgenommen ist. Da der Platz in den Abteilen beschränkt ist, ist es erforderlich, die Gaserzeugungseinrichtung möglichst klein auszubilden, um sie noch in das entsprechende Containerabteil einbauen zu können. Da ein Ausfall einer Gaserzeugungseinrichtung für eine kontrollierte Atmosphärenzusammensetzung bei einem Container in der Regel dazu führt, dass die transportierte Ware nur kurzfristig den Ausfall der Gaserzeugungseinrichtung übersteht, ist es insbesondere bei einem Seetransport unerlässlich, dass die Einrichtung dauerhaft, wartungsfrei und unempfindlich ist. Entsprechende Einrichtungen sind jedoch teuer und aufwendig.

Aus der DE 694 14 847 T2 ist bereits ein Verfahren zum Transport von Früchten oder Gemüse bekannt geworden, bei dem eine Mehrzahl von Containern, die keine eigene Gaserzeugungseinrichtung aufweisen, an eine zentrale Gasversorgungseinrichtung, insbesondere für Stickstoff, anschließbar sind, wodurch vermieden werden kann, dass die einzelnen Container eigene Stickstofferzeugungsvorrichtungen benötigen. Ein solches Verfahren ist dann vorteilhaft, wenn in allen Containern das gleiche Produkt transportiert wird, und die Container im Wesentlichen nur zur Verladung oder Entladung von der zentralen Stickstofferzeugungsvorrichtung getrennt werden, aber in der übrigen Zeit mit der zentralen Anlage in Verbindung stehen. Das bekannte System bietet daher nur geringe Flexibilität.

Der Erfindung liegt die Aufgabe zugrunde, ein verbessertes System zur Überwachung und Steuerung der Atmosphärenzusammensetzung in einem Container zum Transport von Lebensmitteln oder anderen empfindlichen Produkten anzugeben, das auf flexible Weise und kostengünstig sowohl als MA-System als auch als CA-System verwendbar ist.

Diese Aufgabe wird durch die im Anspruch 1 angegebene Erfindung gelöst. Vorteilhafte Weiterbildungen der Erfindung sind in Unteransprüchen angegeben.

Das erfindungsgemäße System bezieht sich auf eine Atmosphärenzusammensetzung in einem Container zum Transport von Lebensmitteln, bei dem wenigstens der O₂-Gehalt und der CO₂-Gehalt der Containeratmosphäre mittels Sensoren erfasst wird, und die Ist-Werte an ein Steuergerät übermittelt und mit gespeicherten Soll-Werten verglichen werden. Das Steuergerät ist dem Container unmittelbar zugeordnet, insbesondere in den Container eingebaut. Das Steuergerät sendet bei Abweichung der Ist-Werte von den Soll-Werten Steuersignale an Betätigungsmittel zur Änderung des O₂- und/oder des CO₂-Werts in der Containeratmosphäre.

Erfindungsgemäß ist der Container zusätzlich an eine vom Container räumlich getrennte Stickstoffversorgungseinrichtung anschließbar, welche in der Lage ist, mehrere gleichartige Container mit einem Stickstoffstrom zu versorgen. Mittels eines O₂-Sensors im Container kann das Steuergerät des Containers bei angeschlossener Stickstoffversorgungseinrichtung Betätigungsmittel zur Steuerung des dem Container zugeführten Stickstoffstroms einstellen.

Ein solches erfindungsgemäßes System kann daher sowohl in einer Betriebsart zur Einstellung einer MA-Atmosphäre als auch zur Einstellung einer CA-Atmosphäre verwendet werden. Ein derart ausgebildeter Container weist Sensoren und Steuereinrichtungen zur Einstellung des O₂- und/oder des CO₂-Werts auf sowie eine Einrichtung, mit der die O₂- und/oder CO₂-Werte bei Verwendung als MA-Container im gewissen Rahmen verändert werden können. Die Änderung der Atmosphärenzusammensetzung erfolgt dabei im Wesentlichen dadurch, dass in gesteuerter Weise dem Container Frischluft zugeführt wird.

Wenn der Container jedoch an eine Stickstoffversorgungseinrichtung angeschlossen wird, kann er in der Betriebsart CA-Atmosphäre verwendet werden, in der je nach Bedarf von der externen Stickstofferzeugungsvorrichtung Stickstoff zugeführt wird und damit die Atmosphärenzusammensetzung im Container in gewünschter Weise gestellt wird. Die Steuerung erfolgt dabei durch das containereigene Steuergerät, so dass nur soviel externes Gas zugeführt wird, wie vom jeweiligen Container selbst benötigt wird.

Ein Container gemäß der Erfindung kann zusätzliche Sensoren zur Erfassung des Feuchtegehalts und/oder der Temperatur im Container aufweisen. Der Feuchtegehalt lässt sich beispielsweise durch Zufuhr von Feuchtigkeit aus einer Kühlanlage, einer Adsorptionsanlage oder einem Membrantrockner ableiten. Die Feuchtigkeit kann entweder vom containereigenen Kühlgerät abgeleitet werden oder auch zentral zugeführt werden. Beispielsweise kann eine Befeuchtungseinrichtung auch der zentralen Stickstofferzeugungseinrichtung zugeordnet werden. Dies ist insbesondere dann von Vorteil, wenn die Stickstofferzeugungseinrichtung in einem eigenen Container eingebaut ist, der eine Vielzahl gleichartiger Transportcontainer mit Stickstoff versorgt. Die Befeuchtungseinrichtung kann dann ebenfalls eine zentrale Versorgung der Transportcontainer mit Feuchtigkeit ermöglichen.

Obgleich jeder einzelne Transportcontainer eine Steuerung zur Einstellung des Stickstoffgehalts im jeweiligen Container aufweist, kann die zentrale Stickstofferzeugungsvorrichtung zusätzlich eine Steuerung zur Einstellung des Stickstoffgehalts im erzeugten Gasstrom aufweisen.

Während des Betriebs des Transportcontainers unter modifizierter Atmosphäre erfolgt die Veränderung des O₂- und/oder des CO₂-Gehalts in der Containeratmosphäre insbesondere dadurch, dass nach Bedarf Frischluft in den Container eintreten kann. Dies erfolgt vorzugsweise dadurch, dass eine steuerbare Klappe vorgesehen ist, die eine Öffnung des Containerinneren zur umgebenden Atmosphäre schafft, wodurch ein Ausgleich zwischen Außenatmosphäre und Innenatmosphäre herstellbar ist. Die Sensoren für CO₂ und O₂ im Container und die mit Sensordaten beaufschlagten Stellglieder regeln dabei die Klappenstellung. Bei einem möglichen Ausfall der Containersteuerung kann vorgesehen sein, die Klappe automatisch in eine Stellung zu bringen, die im ungesteuerten Zustand möglichst optimale Atmosphärebedingungen schafft.

Vorzugsweise erfolgt die Verteilung des Stickstoffstroms von der Stickstofferzeugungseinrichtung zu den jeweiligen zugeordneten Containern mittels Schlauchverbindungen, die an mit gesteuerten Ventilen versehenen Kupplungen an den Containern anschließbar sind.

Zu Protokollierungszwecken kann jeder Container eine Speichereinrichtung zur Aufzeichnung von Betriebsparametern des Containers enthalten, wobei die entsprechenden Logdateien zentral gespeichert und ausgewertet werden können, insbesondere auch über Datenfernverarbeitung.

Da der Container in der Betriebsart MA-System ohne eigenes Kompressorsystem oder eigene Stickstofferzeugungsvorrichtung arbeitet, ergeben sich durch einen einfachen Aufbau nur geringe Kosten. Wegen des fehlenden Stickstoffstroms ist zwar nur eine geringe Sauerstoffabsenkung erreichbar, die auch von dem jeweiligen Produkt abhängt, jedoch genügt dies für eine beschränkte Zeitdauer und für bestimmte Produkte, um diese frisch zu halten.

Da die Standzeiten in einem Hafen oder im Depot kurz sind im Verhältnis zur Transportzeit eines Containers auf einem Schiff, ergeben sich durch den MA-Betriebszustand über eine kurze Zeitdauer kein relevanter Nachteil, insbesondere wenn zuvor eine Spülung des Containers mit einer modifizierten Atmosphäre durchgeführt wurde.

Nach Anschluss des Containers an einen externen Stickstofferzeuger und Einbeziehung der kontrollierten Stickstoffzufuhr in den Regelkreis des containereigenen Steuergeräts ergibt sich für jeden Container ein vollwertiges CA-System. Damit ist eine aktive Regelung der O₂- und CO₂-Konzentration auf vorgegebene Soll-Werte möglich. Die MA-Betriebsart wird speziell im Containerdepot und nach der Entladung ohne eine zentrale Stickstoffzugabe ausschließlich durch Luftregulierung betrieben.

Bei einem ausgeführten System konnten bis zu 40 Container gleichzeitig von einer zentralen Stickstofferzeugungseinrichtung versorgt werden. Es ergaben sich hohe Energieeinsparungen und Betriebskostenreduzierungen. Trotz zentraler Stickstoffversorgung ermöglicht die zentrale Steuerung jedes einzelnen Containers, dass jeder Container unabhängig von anderen Containern auf die eigenen Soll-Werte regelbar ist.

Die Vorteile des Systems liegen insbesondere in den geringen spezifischen Kosten der einzelnen Container, der Unabhängigkeit der Container untereinander bezüglich der einstellbaren Soll-Werte, der Flexibilität der Beladung jedes einzelnen Containers und der Reduzierung der spezifischen Investitionskosten und Betriebskosten des Betriebs des Systems.

Die Erfindung wird nachstehend anhand eines Ausführungsbeispiels näher erläutert. Es zeigen:
- Fig. 1: eine Prinzipansicht der Versorgung einer Reihe gleichartiger Container mit Stickstoff, und
- Fig. 2.: eine Prinzipdarstellung der Steuerung eines Containers.

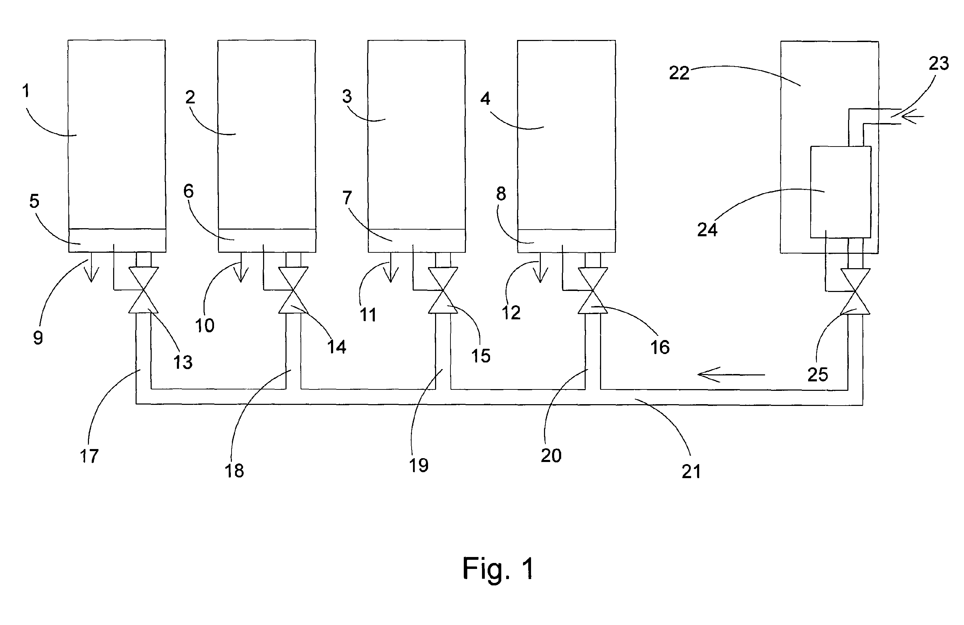

In Fig. 1 sind vier gleichartige Container 1, 2, 3 und 4 dargestellt, die z. B. parallel auf einem Schiffsdeck angeordnet sein können. Die Zahl der gemäß der Erfindung betriebenen Container wird lediglich durch die Praktikabilität beschränkt. Die Container 1 - 4 weisen jeweils Abteile auf, die mit den Ziffern 5, 6, 7, 8 dargestellt sind. In diesen Abteilen befinden sich jeweils Kühlaggregate und Steuerungen, die jeweils demjenigen Container selbst zugeordnet sind. Jeder Container weist auch eine Klappe auf, die mit den Ziffern 9, 10, 11, 12 dargestellt sind. Diese Klappen können von der containereigenen Steuereinheit betätigt werden. Der Öffnungsgrad der Klappen bestimmt sich aus einem Vergleich der Soll-Werte und der Ist-Werte der Atmosphärenzusammensetzung im Container. Dabei ist insbesondere der O₂- und der CO₂-Wert von Bedeutung, so dass z. B. bei erhöhtem O₂-Wert im Container durch Öffnung der Klappen 9, 10, 11 oder 12 Außenluft in den Container eindringen kann, um den O₂-Gehalt abzusenken. Umgekehrt kann der O₂-Gehalt angehoben werden, wenn er zu niedrig geworden ist. Zur Messung des O₂- und CO₂-Gehalts weisen die Container jeweils geeignete Sensoren auf.

Die Container sind ferner mit Anschlusskupplungen 13, 14, 15, 16 versehen, an die Schläuche 17, 18, 19, 20 anschließbar sind, die zentral über eine Verteilerleitung 21 zu einem weiteren Container 22 geführt sind. Die Anschlusskupplungen enthalten Ventile, die von der jeweiligen Steuereinheit eines Containers gesteuert werden können. Insbesondere steuert dabei der O₂-Gehalt im Container die Ventilstellung.

Der Container 22 enthält eine Stickstofferzeugungsvorrichtung 24, beispielsweise in Form einer Stickstoffmembran, der Außenluft über den Einlass 23 zugeführt wird, wobei der Stickstoffanteil der zugeführten Außenluft über das Ventil 25 in die Verteilerleitung 21 geführt wird. Das Ventil 25 ist je nach Bedarf der angeschlossenen Container 1 - 4 und in Abhängigkeit vom Stickstoffgehalt der die Stickstofferzeugungsvorrichtung verlassenden Atmosphäre regelbar.

Während des MA-Betriebs der Container 1 - 4 sind die Schläuche 17 - 20 nicht an den Containern angeschlossen. Die Steuerung der Atmosphärenzusammensetzung im Container erfolgt daher autonom mittels der jeweiligen containereigenen Steuergeräte, über die die Klappen 9, 10, 11, 12 nach Bedarf geöffnet oder geschlossen werden.

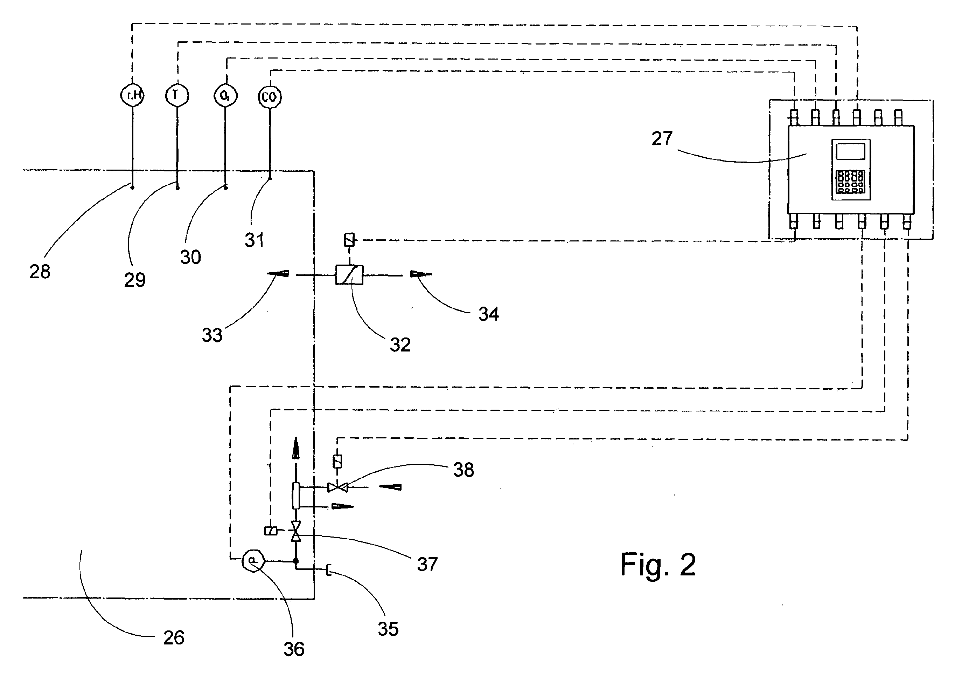

Fig. 2 zeigt die Steuerung eines Containers 26 mittels eines Steuergeräts 27, dem Sensorsignale der Sensoren 28, 29, 30 und 31 zugeführt werden, die die Feuchte (28), die Temperatur (29), den O₂-Gehalt (30) und den CO₂-Gehalt (31) erfassen. Die erfassten Sensordaten werden vom Steuergerät mit gesetzten Soll-Werten verglichen und in Abhängigkeit vom Ergebnis wird ein Steuersignal auf eine Luftklappe 32 geleitet, die an geeigneter Stelle in der Containerwand angeordnet ist. Über einen Einlass 33 kann damit Außenluft in den Container geleitet werden oder über einen Auslass 34 Containeratmosphäre abgegeben werden. Die Luftklappe kann ggf. mit einer Lüftungseinrichtung ergänzt werden, die z. B. als Ventilator ausgebildet ist und die es ermöglicht, insbesondere wenn an einer anderen Wand des Containers eine weitere Lüftungsklappe vorgesehen ist, eine schnelle Spülung des Containers durchzuführen.

Des Weiteren verfügt der Container 26 über einen Stickstoffkupplungsanschluss 35, der mit einem Regelventil 37 versehen ist und auch einen Drucksensor 36 umfasst. Wenn in der CA-Betriebsart ein Stickstoffstrom von der zentralen Stickstofferzeugungseinrichtung zur Verfügung gestellt werden kann, wird über den Stickstoffkupplungsanschluss 35, gesteuert über das Ventil 37, ein Stickstoffstrom in den Container 26 eingeleitet. Die Steuerung des Ventils 37 erfolgt über das Steuergerät 27 in Abhängigkeit insbesondere des O₂-Gehalts, welcher über den Sensor 30 erfasst wird.

Während des Betriebs des Containers 26 im CA-Modus ist die Luftklappe 32 in der Regel geschlossen, sie kann jedoch auch ergänzend zur Ventilsteuerung 37 verwendet werden, um die Geschwindigkeit der Spülung des Containers mit Stickstoff zu beeinflussen.

Der Container 26 weist ferner einen Einlass für Feuchtigkeit auf, die beispielsweise aus der Kühleinrichtung abgeleitet wird. Alternativ kann auch der Stickstoffstrom selbst befeuchtet werden, beispielsweise aus einer zentralen Befeuchtungseinrichtung. Auch der Feuchtegehalt im Container wird durch das containereigene Steuergerät 27 über das Kondensatventil 38 eingestellt.

### Bezugszeichen

- 1- 4: Container
- 5-8: Abteile
- 9-12: Klappen
- 13-16: Ventile
- 17-20: Schläuche
- 21: Verteiler
- 22: Container
- 23: Lufteinlass
- 24: Stickstofferzeugungseinrichtung
- 25: Ventil
- 26: Container
- 27: Steuergerät
- 28: Feuchtesensor
- 29: Temperatursensor
- 30: O₂-Sensor
- 31: CO₂-Sensor
- 32: Luftklappe
- 33: Einlass
- 34: Auslass
- 35: Stickstoffanschluss
- 36: Drucksensor
- 37: Ventil
- 38: Kondensatventil

## Patentansprüche

1. System zur Überwachung und Steuerung der Atmosphärenzusammensetzung in einem Container zum Transport von Lebensmitteln oder anderen empfindlichen Produkten, bei dem wenigstens der O₂-Gehalt und der CO₂-Gehalt der Containeratmosphäre mittels Sensoren (30, 31) erfasst wird und die von den Sensoren erfassten O₂- und CO₂-Ist-Werte an ein dem Container zugeordnetes Steuergerät (27) übermittelt und mit gespeicherten Soll-Werten verglichen werden, wobei bei Abweichung der Ist-Werte von den Soll-Werten das Steuergerät Steuersignale an Betätigungsmittel (32) zur Erhöhung oder Erniedrigung des O₂- und/oder des CO₂-Werts in der Containeratmosphäre abgibt, um die O₂- und/oder CO₂-Werte in Richtung auf eine Annäherung an die Soll-Werte zu ändern, **dadurch gekennzeichnet, dass** der Container an eine vom Container räumlich getrennte Stickstoffversorgungseinrichtung (24) anschließbar ist, welche in der Lage ist, mehrere gleichartige Container (1 - 4) mit einem Stickstoffstrom zu versorgen, und dass bei angeschlossener Stickstoffversorgungseinrichtung mittels des Steuergeräts (27) in Abhängigkeit des O₂-Gehalts im Container Betätigungsmittel (37) zur Steuerung des dem Container zugeführten Stickstoffstroms einstellbar sind.

2. System nach Anspruch 1, **dadurch gekennzeichnet, dass** der Container einen Sensor (28) zur Erfassung des Feuchtegehalts und/oder der Temperatur (29) im Container aufweist.

3. System nach Anspruch 1, **dadurch gekennzeichnet, dass** die Stickstofferzeugungsvorrichtung (24) eine Steuerung zur Einstellung des Stickstoffgehalts und/oder des Volumenstroms des die Stickstofferzeugungsvorrichtung verlassenden Stickstoffstroms aufweist.

4. System nach einem oder mehreren der Ansprüche 1 - 3, **dadurch gekennzeichnet, dass** eine Befeuchtungsvorrichtung (38) vorgesehen ist, über die ein Gasstrom erhöhter Feuchtigkeit in den Container überführbar ist.

5. System nach Anspruch 4, **dadurch gekennzeichnet, dass** die Befeuchtungsvorrichtung der Stickstofferzeugungsvorrichtung zugeordnet ist, und dass mittels der Befeuchtungsvorrichtung eine erhöhte Feuchte in den die Stickstofferzeugungsvorrichtung verlassenden Gasstrom einleitbar ist.

6. System nach Anspruch 5, **dadurch gekennzeichnet, dass** die erhöhte Feuchte selektiv in den dem jeweiligen Container zugeführten Gasstrom einleitbar ist.

7. System nach Anspruch 5 oder 6, **dadurch gekennzeichnet, dass** das Steuergerät des Containers mit der Steuerung der Stickstofferzeugungsvorrichtung und/oder der Befeuchtungseinrichtung gekoppelt ist.

8. System nach Anspruch 1, **dadurch gekennzeichnet, dass** das Betätigungsmittel (32) zur Erhöhung oder Erniedrigung des O₂- und/oder des CO₂-Werts durch eine steuerbare Öffnung der Containerwand gebildet ist.

9. System nach Anspruch 1, **dadurch gekennzeichnet, dass** die Stickstofferzeugungseinrichtung eine Stickstoffmembran enthält, die von über einen Kompressor zugeführter Außenluft zur Erhöhung des N₂-Anteils in der Luft durchströmt wird, wobei der **dadurch** erzeugte Gasstrom mit erhöhtem N₂-Anteil über Verteilerkanäle (17 - 21) an einen oder mehrere einer Mehrzahl von Containern überführbar ist.

10. System nach Anspruch 9, **dadurch gekennzeichnet, dass** die Stickstofferzeugungseinrichtung in einen Standardcontainer (22) eingebaut ist.

11. System nach Anspruch 4, **dadurch gekennzeichnet, dass** die Befeuchtungseinrichtung Kondensat aus einer Kühl-, einer Adsorptions- oder Membrantrockneranlage sammelt und steuerbar in einen oder mehrere einer Mehrzahl von Containern überführt.

12. System nach einem oder mehreren der vorhergehenden Ansprüche, **dadurch gekennzeichnet, dass** das Steuergerät jedes Containers eine Speichereinrichtung zur Protokollierung von Betriebsparametern des jeweiligen Containers aufweist.

13. System nach Anspruch 12, **dadurch gekennzeichnet, dass** jeder Container ein Identifikationsmerkmal aufweist, welches zusammen mit dem die Betriebsparameter des Containers repräsentierenden Datensatz gespeichert wird.

14. System nach Anspruch 12 oder 13, **dadurch gekennzeichnet, dass** die Betriebsparameter eines oder mehrerer Container und/oder der Stickstofferzeugungsvorrichtung und/oder der Befeuchtungseinrichtung zentral gespeichert und ausgewertet werden.
